# EUROPÄISCHE PATENTSCHRIFT

(11) **EP 0 652 263 B1**
(45) Veröffentlichungstag und Bekanntmachung des Hinweises auf die Patenterteilung: **02.01.1997**
(21) Anmeldenummer: 94116724.9
(22) Anmeldetag: 24.10.1994
(51) Int. Cl.: C09D 5/03, C08G 18/79, C09D 133/06

(54) **Pulverlack und seine Verwendung**
Powder coating and its use
Revêtement à poudre et son utilisation

(30) Priorität: 05.11.1993 DE 4337855
(43) Veröffentlichungstag der Anmeldung: 10.05.1995
(73) Patentinhaber: BAYER AG, 51368 Leverkusen (DE)
(72) Erfinder: Wamprecht, Christian, Dr., D-41472 Neuss (DE); Laas, Hans-Josef, Dr., D-50733 Köln (DE); Bock, Manfred, Dr., D-51375 Leverkusen (DE); Meier-Westhues, Hans-Ulrich, Dr., D-51379 Leverkusen (DE); Schultz, Wolfgang, D-47829 Krefeld (DE); Kahl, Lothar, Dr., D-51465 Bergisch Gladbach (DE)

(56) Entgegenhaltungen:
- CHEMICAL ABSTRACTS, vol. 116, no. 10, 9. März 1992, Columbus, Ohio, US; abstract no. 85931, Seite 125 ;

## Beschreibung

Die Erfindung betrifft einen neuen Pulverlack auf Basis von Epoxidgruppen aufweisenden Copolymerisaten olefinisch ungesättigter Monomerer und Säuren bzw. Säurederivaten als Härter und die Verwendung dieses Pulverlacks zur Beschichtung hitzeresistenter Substrate, insbesondere zur Herstellung von Automobilklarlacken.

Pulverlacke auf Basis von epoxyfunktionellen Copolymerisaten, die Carbonsäuren, insbesondere Dicarbonsäuren bzw. Dicarbonsäureanhydride als Härter enthalten sind bekannt (DE-AS 2 240 312, DE-AS 2 240 314, DE-OS 2 457 826 oder US-PS 4 091 048).

Auch Copolymerisate, die neben Epoxidgruppen noch weitere funktionelle Gruppen enthalten, z.B. Hydroxyl-, Anhydrid- oder Amidgruppen, können zur Herstellung von Pulverlacken verwendet werden (vgl. z.B. DE-OS 2 441 624, DE-OS 2 441 752, DE-OS 2 441 753, DE-OS 2 457 827, DE-OS 2 457 894, DE-OS 2 509 410, US-'PS 3 932 367, US-PS 3 991 132, US-PS 4 374 954).

Die in diesen Veröffentlichungen beschriebenen Pulverlacke wurden insbesondere für die Automobillackierung entwickelt. Die resultierenden Lackfilme entsprechen jedoch bezüglich der Lösungsmittel- und Chemikalienbeständigkeit nicht in vollem Umfang den diesbezüglichen Anforderungen der Praxis.

Es hat daher nicht an Versuchen gefehlt, die unzureichende Lösemittelbeständigkeit von Pulverlacken auf Basis von epoxyfunktionellen Polyacrylaten und Dicarbonsäuren bzw. deren Mono- oder Polyanhydriden zu verbessern. So beschreibt die EP-A-0 299 420 mit Di- oder Polyolen modifizierte Polyanhydridvernetzer auf Basis von aliphatischen Dicarbonsäuren mit 3 bis 20 Kohlenstoffatomen. Entsprechende Pulverlacke mit epoxyfunktionellen Polyacrylaten als Bindemittel liefern gut verlaufende Lackfilme, die jedoch bei den in der Praxis geforderten, niedrigen Einbrenntemperaturen von ca. 140°C nicht die erforderliche Chemikalienbeständigkeit besitzen.

Die EP-A-0 509 392 und EP-A-0 509 393 beschreiben Pulverlacke auf Basis von epoxyfunktionellen Copolymerisaten und aliphatischen oder cycloaliphatischen Carbonsäuren, deren Anhydriden oder polyolmodifizierten Anhydriden zweibasischer Säuren. Erfindungswesentlich ist jeweils die erzielbare niedrige Einbrenntemperatur von 120°C, die im Falle der EP-A-0 509 392 auf einen Gehalt an tert.-Butylacrylat oder tert.-Butylmethacrylat von 5 bis 50 Gew.-% und im Falle der EP-A-0 509 393 auf einen Gehalt an Styrol von 35 bis 50 Gew.-% in dem epoxyfunktionellen Copolymerisat zurückzuführen sein soll.

Die US-PS 4 346 144 beschreibt Pulverlacke aus A) epoxyfunktionellen Copolymerisaten, B) aliphatischen Dicarbonsäuren mit 8 bis 18 Kohlenstoffatomen als Vernetzer und C) einer zusätzlichen Vernetzerkomponente, die mit Hydroxyl- oder Carboxylgruppen reagieren kann, wobei alkylierte Melamin-Formaldehydharze, alkylierte Glykolurilharze, aliphatische Glycidylether und cycloaliphatische Diepoxide genannt werden. Im Text und in mehreren Beispielen werden auch blockierte Polyisocyanate als zusätzliche Vernetzersubstanzen erwähnt.

Aus Umweltschutzgründen ist es jedoch wünschenswert, Lacke bereitzustellen, die völlig frei von Emissionen sind, seien es Lösungsmittel oder Abspalter in Form von Blockierungsmitteln.

Es war daher die der Erfindung zugrundeliegende Aufgabe, einen neuen Pulverlack zur Verfügung zu stellen, der nicht mit den genannten Nachteilen des Standes der Technik behaftet ist, d.h. der bei Temperaturen unter 160°C zu einem glatt verlaufenden, elastischen, lösungsmittel- und chemikalienbeständigen Film von hohem Glanz ausgehärtet werden kann.

Diese Aufgabe konnte mit der Bereitstellung des nachstehend näher beschriebenen erfindungsgemäßen Pulverlacks gelöst werden. Der neue Pulverlack ist durch die Mitverwendung von Uretdiongruppen aufweisenden Polyadditionsprodukten als zusätzliche Härterkomponente gekennzeichnet.

Die Erkenntnis, daß die erfindungsgemäße Aufgabe unter Mirverwendung von Uretdiongruppen aufweisenden Vernetzerkomponenten gelöst werden kann, kann als überraschend bezeichnet werden, da bislang empfohlen wurde, Pulverlacke, die Uretdiongruppen enthaltende Härter enthalten, bei Temperaturen von oberhalb 160°C, vorzugsweise von mindestens 170°C auszuhärten (vgl. Ausführungsbeispiele der EP-A-0 045 994 oder EP-A-0 045 998).

Gegenstand der Erfindung ist somit ein Pulverlack zur Herstellung von bei Temperaturen von 120 bis 150°C aushärtbaren, vergilbungsfreien, elastischen, lösemittel- und chemikalienbeständigen Beschichtungen, enthaltend
A) eine Bindemittelkomponente, bestehend aus mindestens einem Epoxid- und gegebenenfalls Hydroxylgruppen aufweisenden Copolymerisat olefinisch ungesättigter Monomerer mit einem Epoxidäquivalentgewicht von 365 bis 2840, einer Glasübergangstemperatur Tg von 20 bis 100°C und einem mittleren Molekulargewicht Mw von 1500 bis 30000,
B) eine Härterkomponente mit einem Schmelzpunkt oder -bereich innerhalb des Temperaturbereichs von 40 bis 130°C, bestehend aus mindestens einer Komponente ausgewählt aus (i) (cyclo)aliphatischen Dicarbonsäuren mit 4 bis 20 Kohlenstoffatomen, (ii) monomeren und/oder polymeren Anhydriden derartiger Dicarbonsäuren, (iii) polyolmodifizierten, polymeren Anhydriden derartiger Dicarbonsäuren und (iv) aliphatischen Hydroxycarbonsäuren mit 4 bis 18 Kohlenstoffatomen,
und gegebenenfalls
C) aus der Pulverlacktechnologie bekannte Hilfs- und Zusatzmittel,
dadurch gekennzeichnet, daß der Pulverlack zusätzlich
D) Uretdiongruppen aufweisende Polyadditionsverbindungen mit einem Schmelzpunkt oder -bereich innerhalb des Temperaturbereichs von 40°C bis 125°C auf Basis (cyclo)aliphatischer Diisocyanate enthält,
mit der Maßgabe, daß die Komponenten A), B) und D) in solchen Mengenverhältnissen vorliegen, daß auf jede Epoxidgruppe der Komponente A) 0,5 bis 1,5 Carboxyl- und/oder Anhydridgruppen der Komponente B) und 0,1 bis 1,2 Uretdiongruppen der Komponente D) entfallen.

Gegenstand der Erfindung ist auch die Verwendung dieses Pulverlacks zur Herstellung von Beschichtungen auf beliebigen hitzeresistenten Substraten, insbesondere bei der Herstellung von Automobilklarlacken.

Die Bindemittelkomponente A) besteht aus mindestens einem Copolymerisat olefinisch ungesättigter Verbindungen, das neben Epoxidgruppen auch Hydroxylgruppen enthalten kann. Das Epoxyäquivalentgewicht der in der Komponente A) vorliegenden Copolymerisate liegt bei 365 bis 2840, vorzugsweise bei 430 bis 1420. Der Hydroxylgruppengehalt der Copolymerisate liegt bei 0 bis 3, vorzugsweise bei 0 bis 2,2 Gew.-%.

Die in der Bindemittelkomponente A) vorliegenden Copolymerisate weisen im übrigen eine Glasübergangstemperatur Tg von 20 bis 100°C, vorzugsweise 30 bis 90°C und ein als Gewichtsmittel bestimmtes mittleres Molekulargewicht Mw von 1500 bis 30000, vorzugsweise 2000 bis 20000 auf. Die hier gemachten Angaben bezüglich des Molekulargewichts beziehen sich auf das gelpermeationschromatographisch unter Verwendung von Polystyrol als Standard ermittelte Gewichtsmittel.

Bei den in der Komponente A) vorliegenden Copolymerisaten handelt es sich vorzugsweise um solche aus
(i) 5 bis 35 Gew.-Teilen, besonders bevorzugt 10 bis 30 Gew.-Teilen Glycidylacrylat und/oder Glycidylmethacrylat,
(ii) 0 bis 20 Gew.-Teilen, besonders bevorzugt 0 bis 15 Gew.-Teilen hydroxyfunktionellen, olefinisch ungesättigten Verbindungen und
(iii) 45 bis 95 Gew.-Teilen, besonders bevorzugt 40 bis 90 Gew.-Teilen weiteren, nichtfunktionellen, olefinisch ungesättigten Verbindungen,
mit der Maßgabe, daß die Summe der Gewichtsteile der Komponenten (i) bis (iii) 100 ergibt.

Bei den Monomeren (ii) handelt es sich insbesondere um Hydroxyalkylester der Acryl- oder Methacrylsäure mit 2 bis 8, vorzugsweise 2 bis 4 Kohlenstoffatomen im Hydroxyalkylrest, wie z.B. Hydroxyethylacrylat, -methacrylat, Hydroxypropylacrylat, -methacrylat (insbesondere die Anlagerungsprodukte von Propylenoxid an Acryl- bzw. Methacrylsäure), 2- oder 4-Hydroxybutylacrylat oder -methacrylat oder um Gemische dieser Monomeren. Auch Umsetzungsprodukte der genannten Monomeren mit ε-Caprolacton oder Monoepoxiden wie z.B. Ethylen- und/oder Propylenoxid sind als Monomere (ii) geeignet.

Bei den Monomeren (iii) handelt es sich beispielsweise um Vinylaromaten wie z.B. Styrol, Vinyltoluol, α-Methylstyrol, Alkylester der Acryl- oder Methacrylsäure mit 1 bis 18, vorzugsweise 1 bis 8 Kohlenstoffatomen im Alkylrest wie z.B. Methyl(meth)acrylat, Ethyl(meth)acrylat, n-Propyl(meth)acrylat, Isopropyl(meth)acrylat, n-Butyl(meth)acrylat, Isobutyl(meth)acrylat, tert.-Butyl(meth)acrylat, 2-Ethylhexyl(meth)acrylat, Neopentyl(meth)acrylat, Stearylmethacrylat, sonstige Ester der (Meth)Acrylsäure wie beispielsweise die Cyclohexyl-, Isobornyl-, 3,3,5-Trimethylcyclohexyl-, Phenyl-, Benzyl- oder 2-Phenylester dieser Säuren, Maleinsäure- bzw. Fumarsäuredi(cyclo)alkylester mit 1 bis 8 Kohlenstoffatomen in den Alkylresten wie z.B. Maleinsäuredimethylester, Maleinsäurediethylester, Maleinsäurediisopropylester, Maleinsäurediisobutylester, Maleinsäuredi-tert.-butylester, Maleinsäuredicyclohexylester und die entsprechenden Fumarsäuredialkylester.

Bei der Herstellung der in der Komponente A) vorliegenden Copolymerisate können innerhalb der oben angegebenen Mengenanteilsgrenzen jeweils beliebige Gemische der Monomeren (i) bis (iii) verwendet werden, mit der Maßgabe, daß diese Auswahl bei der Herstellung der Copolymerisate so erfolgt, daß die resultierenden Copolymerisate Epoxidgruppen- und Hydroxylgruppengehalte sowie Glasübergangstemperaturen innerhalb der obengenannten Bereiche aufweisen.

Diese für die erfindungsgemäße Verwendbarkeit der Copolymerisate wesentliche Bedingung wird dann erfüllt, wenn bei der Herstellung der Copolymerisate ein geeignetes Verhältnis von "weichmachenden" Monomeren, die zur Erniedngung der Glasübergangstemperatur der Copolymeren führen, zu "hartmachenden" Monomeren, die zur Erhöhung der Glasübergangstemperatur führen, zur Anwendung gelangt.

"Weichmachende" Monomere sind beispielsweise Alkylester der Acrylsäure, wie z.B. Ethylacrylat, n-Butylacrylat, Isobutylacrylat und 2-Ethylhexylacrylat.

"Hartmachende" Monomere sind beispielsweise Alkylester der Methacrylsäure, wie z.B. Methylmethacrylat, Ethylmethacrylat, Isobutylmethacrylat, Cyclohexylmethacrylat, Isopropylmethacrylat, tert.-Butylmethacrylat, Neopentylmethacrylat, Isobornylmethacrylat und 3,3,5-Trimethylcyclohexylmethacrylat, Vinylaromaten, wie z.B. Styrol, Vinyltoluol und α-Ethylstyrol.

Die Herstellung der Copolymerisate A) erfolgt durch radikalisch initiierte Copolymerisation der obengenannten Monomeren in geeigneten organischen Lösungsmitteln. Dabei werden die Monomeren bei Temperaturen von 60 bis 200°C, vorzugsweise 80 bis 180°C, in Gegenwart von Radikalbildnern und gegebenenfalls Molekulargewichtsreglern copolymerisiert.

Die Herstellung der Copolymerisate erfolgt vorzugsweise in inerten, organischen Lösungsmitteln. Geeignete Lösungsmittel sind beispielsweise Aromaten, wie Toluol oder Xylol, Ester wie Ethylacetat oder Butylacetat, Ketone, wie Aceton, Methylethylketon oder Methylisobutylketon oder beliebige Gemische derartiger Lösungsmittel.

Die Herstellung der Copolymerisate kann kontinuierlich oder diskontinuierlich erfolgen. Üblicherweise wird in einen Polymerisationsreaktor gleichmäßig und kontinuierlich die Monomermischung und der Initator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren, vorzugsweise Maleinsäuredialkylester, als alleiniges Reaktionsmedium oder im Gemisch mit Lösungsmitteln der genannten Art vorlegen und die restlichen Monomeren und Hilfsmittel getrennt oder gemeinsam in diese Vorlage bei der Reaktionstemperatur eintragen. Im allgemeinen erfolgt die Polymerisation unter Atmosphärendruck, kann jedoch auch bei Drucken bis zu 25 bar durchgeführt werden. Die Initiatoren werden in Mengen von 0,05 bis 12 Gew.-%, vorzugsweise 0,1 bis 10 Gew.-%, bezogen auf die Gesamtmenge der Monomeren, eingesetzt.

Geeignete Initiatoren sind übliche Radikalstarter, wie z.B. aliphatische Azoverbindungen, wie Azodiisobuttersäurenitril, Azo-bis-2-methylvaleronitril, 1,1'-.Azo-bis-1-cyclohexannitril und 2,2'-Azo-bis-isobuttersäurealkylester; symmetrische Diacylperoxide, wie z.B. Acetyl-, Propionyl- oder Butyrylperoxid, mit Brom-, Nitro-, Methyl- oder Methoxygruppen substituierte Benzoylperoxide, Lauylperoxide; symmetrische Peroxydicarbonate, z.B. Diethyl-, Diisopropyl-, Dicyclohexyl- sowie Dibenzoylperoxydicarbonat; tert.-Butylperoxy-2-ethylhexanoat, tert.-Butylperbenzoat; Hydroperoxide, wie beispielsweise tert.-Butylhydroperoxid, Cumolhydroperoxid; Dialkylperoxide, wie Dicumylperoxid; tert.-Butylcumylperoxid oder Di-tert.-butylperoxid.

Zur Regelung des Molekulargewichtes der Copolymerisate können übliche Regler bei der Herstellung eingesetzt werden. Beispielhaft genannt seien tert.-Dodecylmercaptan, n-Dodecylmercaptan oder Mercaptoethanol. Die Regler können in Mengen von 0,1 bis 8 Gew.-%, vorzugsweise 0,1 bis 4 Gew.-%, bezogen auf die Gesamtmenge der Monomeren, zugegeben werden.

Nach dieser Verfahrensweise erhält man organische Lösungen der Copolymerisate, die durch Abdampfen des Lösungsmittels als gebrauchsfertige Feststoffe der obengenannten Glasübergangstemperatur und Gehaltes an funktionellen Gruppen isoliert werden.

Das Lösungsmittel bzw. Lösungsmittelgemisch wird dabei möglichst vollständig, in der Regel bis auf einen Restgehalt ≤2 Gew.-%, bevorzugt ≤1 Gew.-%, beispielsweise durch Sprühtrocknung, Entgasung in Ausdampfextrudern oder Destillation, gegebenenfalls im Vakuum, entfernt.

Im Falle einer lösungsmittelfreien Fahrweise fallen die Copolymerisate als in der Hitze bei Temperaturen ≥120°C rührbare, viskose Schmelzen an, die nach Erkalten und Erstarren granuliert werden.

Die Härterkomponente B) besteht aus mindestens einer Komponente ausgewählt aus der Gruppe bestehend aus (i) aliphatischen und/oder cycloaliphatischen Dicarbonsäuren mit 4 bis 20 Kohlenstoffatomen, (ii) monomeren oder polymeren Anhydriden derartiger Säuren, (iii) polyolmodifizierten, polymeren Anhydriden derartiger Säuren und (iv) Hydroxycarbonsäuren, wobei diese vorzugsweise ausschließlich im Gemisch mit Anhydriden (ii) und/oder (iii) zum Einsatz gelangen.

Bevorzugte Ausführungen sind in den Ansprüchen angegeben.

Bei den Dicarbonsäuren (i) handelt es sich beispielsweise um Bernsteinsäure, Glutarsäure, Adipinsäure, Pimelinsäure, Suberinsäure, Azelainsäure, Sebacinsäure, Dodecandisäure (1,10-Decandicarbonsäure) oder Hexahydrophthalsäure.

Monomere Anhydride (ii) derartiger Säuren sind beispielsweise Bernsteinsäure-, Glutarsäure- oder Hexahydrophthalsäureanhydrid. Polymere Anhydride (ii) derartiger Säuren sind beispielsweise solche, wie sie durch intermolekulare Kondensation der genannten Säuren oder deren Gemische erhalten werden können. Konkrete Beispiele sind Adipinsäure(poly)anhydrid, Azelainsäure(poly)anhydrid, Sebacinsäure(poly)anhydrid oder Dodecandisäure(poly)anhydrid. Das gelpermeationschromatographisch unter Verwendung von Polystyrol als Standard ermittelte Molekulargewicht Mw dieser Polyanhydride liegt im allgemeinen bei 500 bis 5000, vorzugsweise bei 1000 bis 5000. Die Herstellung der Polyanhydride erfolgt beispielsweise durch Reaktion der Dicarbonsäuren bzw. der Dicarbonsäuregemische mit Essigsäureanhydrid bei Temperaturen von 120 bis 200°C, vorzugsweise 120 bis 170°C. Die dabei abgespaltene Essigsäure wird beispielsweise durch Destillation unter Vakuum entfernt.

Bei den polyolmodifizierten Anhydriden (iii) handelt es sich insbesondere um solche, wie sie gemäß EP-A-0 299 420 zugänglich sind. In diesen Polyolmodifizierten Polyanhydriden liegt das Molverhältnis von Anhydridgruppen zu Carboxylgruppen im allgemeinen bei 0,04:1 bis 5:1, vorzugsweise 1:1 bis 3:1.

Bei den Komponenten (iv) handelt es sich insbesondere um Hydroxycarbonsäuren, die einen zwischen 40 und 150°C liegenden Schmelzpunkt aufweisen. Hierzu gehören beispielsweise 2-Hydroxyisobuttersäure (81°C), 2-Hydroxyhexansäure (61°C), 10-Hydroxydecansäure (76°C), 12-Hydroxydodecansäure (86°C), 16-Hydroxyhexadecansäure (98°C) und 12-Hydroxyoctadecansäure (80°C).

Diese Hydroxycarbonsäuren werden im allgemeinen nur in Kombination mit Polyanhydriden (ii) oder (iii), vorzugsweise (ii) in Mengen von maximal 50 Gew.-%, bezogen auf das Gewicht der Polyanhydride eingesetzt.

Besonders bevorzugt besteht die Härterkomponente B) ausschließlich aus Dicarbonsäuren (i) oder monomeren bzw. polymeren Anhydriden (ii).

Die Härterkomponente B) wird im übrigen in solchen Mengen eingesetzt, daß das Gesamtmolverhältnis von Carboxyl- und Anhydridgruppen zu Epoxidgruppen bei 0,5:1 bis 1,5:1, vorzugsweise bei 0,8:1 bis 1,2:1 liegt.

Bei der erfindungswesentlichen zusätzlichen Härterkomponente D) handelt es sich um Uretdiongruppen aufweisende Polyadditionsverbindungen auf Basis aliphatischer und/oder cycloaliphatischer Diisocyanate, insbesondere um solche auf Basis von 1,6-Hexamethylendiisocyanat (HDI), 1-Isocyanato-3,3,5-trimethyl-5-isocyanatomethylcyclohexan (Isophorondiisocyanat, IPDI), 4,4'-Diisocyanatodicyclohexylmethan oder beliebigen Gemischen dieser Diisocyanate.

Die Herstellung solcher Polyadditionsverbindungen durch Umsetzung Uretdiongruppen aufweisender Polyisocyanate mit gegenüber Isocyanatgruppen reaktiven difunktionellen und gegebenenfalls monofunktionellen Verbindungen, insbesondere ein- oder zweiwertigen, gegebenenfalls Estergruppen aufweisenden Alkoholen ist prinzipiell bekannt und wird beispielsweise in DE-OS 2 420 475, EP-A-0 045 996, EP-A-0 045 998 beschrieben. Die als Härter D) in Betracht kommenden Uretdiongruppen aufweisenden Polyadditionsverbindungen weisen im allgemeinen einen Gehalt an Uretdiongruppen (berechnet als C₂N₂O₂, Molekulargewicht = 84) von 3 bis 16 Gew.-% auf. Der Schmelzpunkt dieser Verbindungen liegt im allgemeinen innerhalb des Bereichs von 40 bis 125°C.

Besonders bevorzugte, Uretdiongruppen aufweisende Härter D) sind jedoch solche, die
einen Gehalt an freien Isocyanatgruppen von 0 bis 2 Gew.-%,
einen Gehalt an Uretdiongruppen von 3 bis 16 Gew.-%,
einen Gehalt an Urethangruppen (berechnet als CHNO₂, Molekulargewicht = 59) von 10 bis 22 Gew.-%,
einen Gehalt an Carbonsäureestergruppen (berechnet CO₂, Molekulargewicht = 44) von 0 bis 20 Gew.l-%
und/oder
einen Gehalt an Carbonatgruppen (berechnet als CO₃, Molekulargewicht = 60) von 0 bis 25 Gew.-%
aufweisen, mit der Maßgabe, daß der Gesamtgehalt an Carbonsäureester- und Carbonatgruppen mindestens 1 Gew.-% beträgt. Die Herstellung solcher Uretdiongruppen aufweisender Polyadditionsverbindungen geschieht gemäß der Lehre der deutschen Patentanmeldung DE-A- 43 27 573 durch Umsetzung von
   I) Uretdiongruppen aufweisenden Polyisocyanaten einer mittleren Isocyanatfunktionalität von 2,0, gegebenenfalls unter Mitverwendung von
   II) weiteren Diisocyanaten in einer Menge von bis zu 70 Gew.-%, bezogen auf das Gesamtgewicht der Komponenten I) und II), mit
   III) Estergruppen und/oder Carbonatgruppen aufweisenden Diolen eines mittleren Molekulargewichts von 134 bis 1200, gegebenenfalls unter gleichzeitiger Mitverwendung von
   IV) Estergruppen- und Carbonatgruppen-freien Diolen eines Molekulargewichtsbereichs von 62 bis 300 in einer Menge von bis zu 80 Gew.-%, bezogen auf das Gesamtgewicht der Komponenten III) und IV), und/oder gegebenenfalls
   V) weiteren gegenüber Isocyanatgruppen reaktiven, monofunktionellen Verbindungen in einer Menge von bis zu 40 Gew.-%, bezogen auf das Gesamtgewicht der Komponenten III), IV) und V)
unter Einhaltung eines Äquivalentverhältnisses von Isocyanatgruppen zu gegenüber Isocyanaten reaktiven Gruppen von 1,2:1 bis 0,6:1.

Die Härterkomponente D) wird in dem erfindungsgemäßen Pulverlack in solchen Mengen eingesetzt, daß auf jede Epoxidgruppe der Komponente A) 0,1 bis 1,2, vorzugsweise 0,2 bis 1,0 Uretdiongruppen entfallen.

Bei den gegebenenfalls mitzuverwendenden Hilfs- und Zusatzmitteln C) handelt es sich beispielsweise um Katalysatoren, wie z.B. Zinn(II)hexanoat, Zinn(II)octanoat, Zinn(II)laurat, Dibutylzinnoxid, Dibutylzinnchlorid, Dibutylzinndiacetat, Dibutylzinndilaurat, Dibutylzinnmaleat, Dioctylzinndiacetat, 1,4-Diazabicyclo(2,2,2)octan, 1,5-Diazabicyclo(4,3,0)non-5-en oder 1,8-Diazabicyclo(5,4,0)-undec-7-en. Gegebenenfalls kommen auch Katalysatorgemische zum Einsatz. Weitere Vertreter von geeigneten Katalysatoren sowie Einzelheiten über die Wirkungsweise von solchen Katalysatoren sind im Kunststoffhandbuch Band VII, herausgegeben von Vieweg und Höchtlen, Carl-Hanser-Verlag, München 1966, z.B. auf den Seiten 96 bis 102, beschrieben. Katalysatoren als Zusatzmittel C) kommen, falls überhaupt, in Anteilen von 0,1 bis 5 Gew.-%, vorzugsweise 0,1 bis 3 Gew.-%, bezogen auf die Summe der Komponenten A), B) und D) zum Einsatz.

Weitere Hilfs- und Zusatzmittel C) sind beispielsweise auch Verlaufsmittel wie z.B. Polybutylacrylat oder solche auf Basis von Polysilikonen; Lichtschutzmittel, wie z.B. sterisch gehinderte Amine; UV-Absorber, z.B. Benztriazole oder Benzophenone und Pigmente, wie z.B. Titandioxid.

Zu den oftmals, gegebenenfalls neben weiteren Hilfs- und Zusatzmitteln, eingesetzten Zusatzmitteln C) gehören insbesondere auch Farbstabilisatoren gegen die Gefahr der Überbrennvergilbung. Geeignet sind insbesondere, gegebenenfalls inerte Substituenten aufweisende, Trialkyl- und/oder Triarylphosphite wie beispielsweise Triethylphosphit, Triphenylphosphit oder bevorzugt Trisalkylphenylphosphite, wobei die Alkylsubstituenten 6 bis 12 Kohlenstoffatome aufweisen. Ganz besonders bevorzugt ist Trisnonylphenylphosphit (technisches Produkt, bestehend im wesentlichen aus einem Ester der phosphorigen Säure mit dem Anlagerungsprodukt von Tripropylen an Phenol).

Zur Herstellung der gebrauchsfertigen Pulverlackformulierung kann beispielsweise so vorgegangen werden, daß die Einzelkomponenten nach ihrer Pulverisierung miteinander vermischt werden. In einem solchen Falle bestünden die einzelnen Pulverpartikel aus den Einzelkomponenten A), B), D), und gegebenenfalls C). Gemäß der bevorzugten Art der Herstellung von Pulverlacken werden jedoch die Bestandteile A), B), D), und gegebenenfalls C) innig miteinander vermischt und beispielsweise in Extrudern oder Knetern bei Temperaturen oberhalb des Schmelzbereichs der Einzelkomponenten, beispielsweise bei 70 bis 120°C, zu einem homogenen Matrial vereinigt. Der nach Abkühlung der Schmelze resultierende Feststoff wird anschließend gemahlen und durch Sieben von den Kornanteilen oberhalb der gewünschten Korngröße, beispielsweise oberhalb 0,1 mm, befreit. Auf diese Weise entstehen "gemischte Pulver", in denen jedes einzelne Pulverpartikel bereits die Einzelkomponenten A), B), D), und gegebenenfalls C) enthält.

Die Reihenfolge der Vereinigung der Einzelkomponenten A) bis D) ist weitgehend frei wählbar.

Die Mengenverhältnisse der Einzelkomponenten A), B) und D) werden, wie bereits oben ausgeführt, im übrigen so gewählt, daß auf jede Epoxidgruppe der Komponente A) 0,5 bis 1,5, vorzugsweise 0,8 bis 1,2 Carboxyl- bzw. Anydridgruppen der Komponente B) und 0,1 bis 1,2, vorzugsweise 0,2 bis 1,0 Uretdiongruppen der Komponente D) entfallen.

Die so hergestellten Pulverlackformulierungen können nach üblichen Pulverauftragsverfahren, wie z.B. elektrostatischem Pulversprühen oder Wirbelsintern, auf die zu überziehenden Substrate aufgebracht werden. Die Härtung der Überzüge erfolgt durch Erhitzen auf Temperaturen von 120 bis 200°C, vorzugsweise 120 bis 150°C, beispielsweise während eines Zeitraumes von 10 bis 60 Minuten, vorzugsweise 10 bis 30 Minuten. Man erhält harte, klare, gut verlaufene, glänzende und elastische Überzüge mit hervorragenden Korrosionsschutzeigenschaften, insbesondere sehr guter Lösemittelbeständigkeit bereits bei niedrigen Einbrenntemperaturen von 130 bis 150°C über eine Dauer von 30 Minuten.

Erfindungsgemäß können beliebige hirzeresistente Substrate, wie beispielsweise solche aus Glas, Metallen, Holz oder Kunststoffen beschichtet werden. Vorzugsweise dienen die erfindungsgemäßen Pulverlackformulierungen zur Herstellung von Beschichtungen auf Automobilkarosserien, insbesondere zur Herstellung von Automobilklarlacken.

Die in den nachfolgenden Beispielen genannten Teile und Prozente sind, sofern nicht anders angegeben, Gewichtsteile bzw. Gewichtsprozente.

### Beispiele

### I. Epoxyfunktionelle Polyacrylate A)

### 1. Epoxyfunktionelles Polyacrylat A1

In einem 5-1-Edelstahldruckreaktor werden 1316 g Xylol vorgelegt und auf 145°C erhitzt. Dann werden durch separate Zuläufe innerhalb von 2 Stunden gemeinsam beginnend eine Monomermischung, bestehend aus 798 g Glycidylmethacrylat, 764 g Methylmethacrylat, 190 g Styrol und 190 g n-Butylacrylat sowie eine Initiatorlösung, bestehend aus 170 g tert.-Butylperoxy-2-ethylhexanoat, 70 %ig gelöst in Isododecan, zudosiert. Danach wird noch 2 Stunden bei 145°C gerührt. Anschließend wird das Lösungsmittel im Vakuum abdestilliert, die Harzschmelze in Alublechschalen abgelassen und im Vakuumtrockenschrank bei 140°C und einem Vakuum von ca. 0,1 mbar bis zur Gewichtskonstanz getrocknet. Es resultiert ein farbloses Festharz mit einem Festgehalt von 99,4 %, einer Glasübergangstemperatur Tg von 23,3°C, einem Molekulargewicht Mw von 4500 und einem Epoxyäquivalentgewicht von ca. 375 g/Mol Epoxidgruppe.

### 2. Epoxyfunktionelles Polyacrylat A2

Amatex PD 7610, Handelsprodukt der Fa. Mitsui Toatsu, Epoxyäquivalentgewicht 535 g/Mol Epoxidgruppe. Mw: 7000, Tg: 50,6°C

### II. Carboxylfunktionelle oder anhydridfunktionelle Vernetzer B)

### 1. Polyanhydridvernetzer B1

In einem 3-1-Dreihalskolben mit Rührer, Destillationseinrichtung und Thermometer werden 988 g Dodecandisäure und 308 g Essigsäureanhydrid eingewogen und auf 150°C aufgeheizt. Die entstehende Essigsäure wird abdestilliert. Im Verlauf der Destillation wird die Temperatur auf 170°C erhöht und durch zusätzliches Anlegen von Vakuum die Essigsäure vollständig abdestilliert. Danach wird auf 100°C abgekühlt und das noch flüssige Produkt zum Abkühlen und Erstarren in eine Alublechschale gegossen. Es wird ein Feststoff vom Schmelzpunkt 85°C erhalten.

### 2. Dicarbonsäure B2

Dodecandisäure

### 3. Dicarbonsäure B3

Sebacinsäure

### III. Uretdiongruppen aufweisender Härter D)

a) Herstellung eines Estergruppen aufweisenden Diols:
901 g 1,4-Butandiol und 1712 g ε-Caprolacton werden bei Raumtemperatur unter Stickstoffatmosphäre vermischt, mit 0,3 g Zinn(II)-octoat versetzt und anschließend 5 Stunden auf 160°C erhitzt. Nach Abkühlen auf Raumtemperatur erhält man ein farbloses, flüssiges Produkt mit folgenden Kenndaten:

| | |
|---|---|
| η (23°C): | 180 mPa.s |
| OH-Zahl: | 416 mg KOH/g |
| freies Caprolacton: | 0,2 % |
| mittleres Molekulargewicht (aus OH-Zahl ber.): | 269 |
| Estergruppengehalt (ber.): | 25,3 % |

b) Herstellung des Estergruppen- und Uretdiongruppen aufweisenden Härters D): 1000 g (4,3 val) eines uretdiongruppenhaltigen Polyisocyanates auf Basis von 1-Isocyanato-3,3,5-trimethyl-5-isocyanatomethyl-cyclohexan ("IPDI) mit einem Gehalt an freien Isocyanatgruppen von 17,9 % und einem Gehalt an Uretdiongruppen (bestimmt durch Heißtitration) von 19,1% werden unter trockenem Stickstoff auf 80°C erwärmt. Anschließend gibt man innerhalb von 30 Min. eine Mischung von 457 g (3,4 val) des Estergruppen aufweisenden Diols aus a) und 117 g (0,9 val) 2-Ethyl-1-hexanol zu und rührt bei einer Reaktionstemperatur von max. 105°C, bis der NCO-Gehalt des Reaktionsgemisches nach ca. 2 h auf einen Wert von 0,7 % abgesunken ist.

Die Schmelze wird zum Erkalten auf ein Blech gegossen und man erhält ein praktisch farbloses Festharz mit folgenden Kenndaten:

| | |
|---|---|
| NCO-Gehalt: | 0,7 % |
| Uretdiongruppen-Gehalt (ber.): | 12,1 % |
| NCO-Gehalt gesamt: | 12,8 % |
| Schmelzpunkt: | 82 bis 83°C |

### Verwendungsbeispiele

Die zum Einsatz gelangenden Komponenten werden gründlich gemischt und anschließend auf einem Co-Kneter der Fa. Buss AG, Basel, Typ PLK 46 homogenisiert. Dabei beträgt die Gehäusetemperatur 40°C im Einzugsbereich und 50°C im Verfahrensteil. Die Kneterwelle läuft mit 150 U/Min. Zur Erzielung optimaler Durchmischung wird zweimal extrudiert. Die erstarrten Schmelzen werden mittels einer Sichtermühle, Typ ACM 2, der Fa. Hosokawa-Mikropul, Köln, zu Pulverlacken mit einer Teilchengröße <90 µm gemahlen. Mit einer Elektrostatik-Becherpistole der Fa.ESB werden die Pulverlacke auf entfettete Stahlbleche gesprüht. Dabei liegt eine Hochspannung von 70 kV(-) an. Die Aushärtung erfolgt innerhalb 30 Minuten auf einem Gradientenofen der Fa. Byk bei 140°C und 150°C.

**Zusammensetzungen der erfindungsgemäßen Pulverlacke (Beispiele 1-6) und der Vergleichspulverlacke (Vergleichsbeispiele V1-V4); Angaben in Gew. -Teilen**

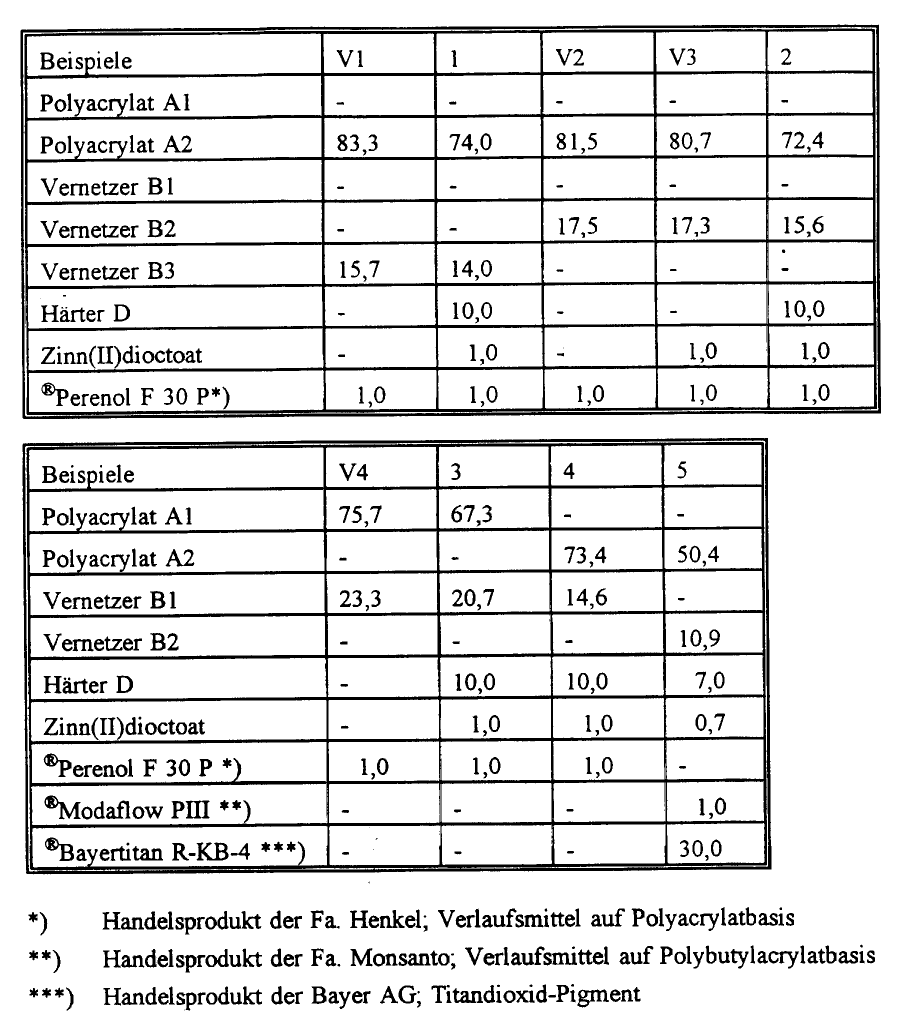

**Prüfergebnisse der erfindungsgemäßen Pulverlacke (Beispiele 1-6) und der Vergleichspulverlacke (Vergleichsbeispiele V1-V4)**

### 1. Einbrennbedingungen: 30 Minuten 140°C

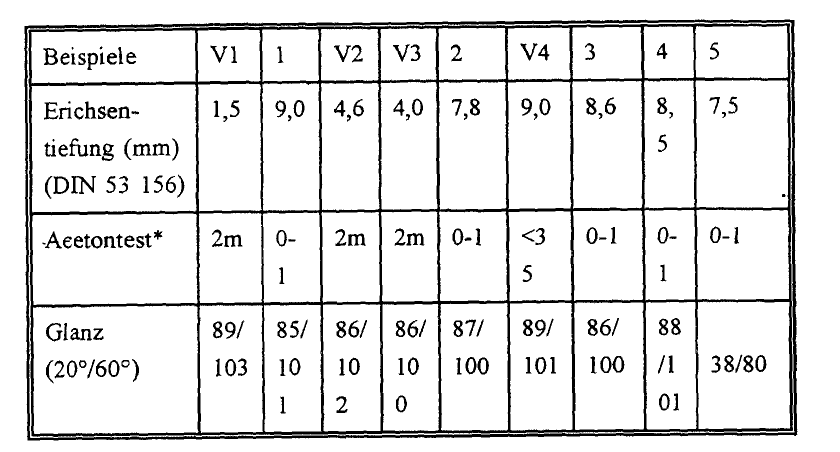

### 2. Einbrennbedingungen: 30 Minuten 150°C

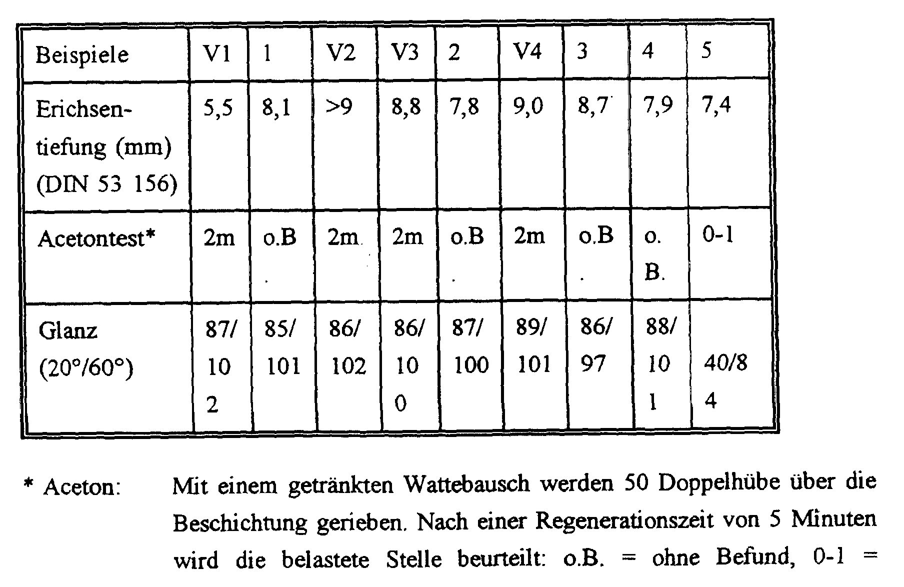

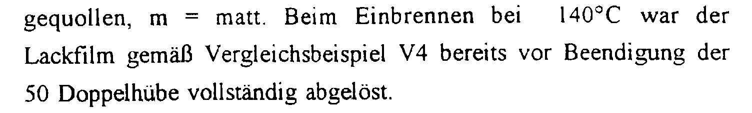

Die Lackfilme der Beispiele 1 bis 5 haben im Vergleich zu den Lackfilmen der Vergleichsbeispiele V1 bis V4 eine deutlich höhere Beständigkeit gegen die Einwirkung von Aceton, obwohl gemäß der bisherigen Lehre (Ausführungsbeispiele der EP-A 0 045 998) Uretdiongruppen aufweisende Härter bei den angewandten Einbrennbedingungen von 140 und 150°C mit Hydroxylgruppen (entstehen hier aus der Reaktion zwischen Expoxid- und Carboxylgruppen) nicht reagieren. Obwohl der Lackfilm gemäß Vergleichsbeispiel V4 ein sehr guten Wert bezüglich der Erichsentiefung ergab, ist er wegen der völlig unzureichenden Lösungmittelbeständigkeit völlig unbrauchbar.

## Patentansprüche

1. Pulverlack zur Herstellung von bei Temperaturen von 120 bis 150°C aushärtbaren, vergilbungsfreien, elastischen, lösemittel- und chemikalienbeständigen Beschichtungen, enthaltend
A) eine Bindemittelkomponente, bestehend aus mindestens einem Epoxid- und gegebenenfalls Hydroxylgruppen aufweisenden Copolymerisat olefinisch ungesättigter Monomerer mit einem Epoxidäquivalentgewicht von 365 bis 2840, einer Glasübergangstemperatur Tg von 20 bis 100°C und einem mittleren Molekulargewicht Mw von 1500 bis 30000,
B) eine Härterkomponente mit einem Schmelzpunkt oder -bereich innerhalb des Temperaturbereichs von 40 bis 130°C, bestehend aus mindestens einer Komponente ausgewählt aus (i) (cyclo)aliphatischen Dicarbonsäuren mit 4 bis 20 Kohlenstoffatomen, (ii) monomeren und/oder polymeren Anhydriden derartiger Dicarbonsäuren, (iii) polyolmodifizierten, polymeren Anhydriden derartiger Dicarbonsäuren und (iv) aliphatischen Hydroxycarbonsäuren mit 4 bis 18 Kohlenstoffatomen,
und gegebenenfalls
C) aus der Pulverlacktechnologie bekannte Hilfs- und Zusatzmittel,
dadurch gekennzeichnet, daß der Pulverlack zusätzlich
D) Uretdiongruppen aufweisende Polyadditionsverbindungen mit einem Schmelzpunkt oder -bereich innerhalb des Temperaturbereichs von 40°C bis 125°C auf Basis (cyclo)aliphatischer Diisocyanate enthält,
mit der Maßgabe, daß die Komponenten A), B) und D) in solchen Mengenverhältnissen vorliegen, daß auf jede Epoxidgruppe der Komponente A) 0,5 bis 1,5 Carboxyl- und/oder Anhydridgruppen der Komponente B) und 0,1 bis 1,2 Uretdiongruppen der Komponente D) entfallen.

2. Pulverlack gemäß Anspruch 1, dadurch gekennzeichnet, daß die Komponente A) aus mindestens einem Copolymerisat aus
(i) 5 bis 35 Gew.-Teilen Glycidylacrylat und/oder Glycidylmethacrylat,
(ii) 0 bis 20 Gew.-Teilen Hydroxyalkylester der Acryl- und/oder Methacrylsäure mit 2 bis 4 Kohlenstoffatomen im Alkoholrest und/oder deren Umsetzungsprodukte mit ε-Caprolacton oder Monoepoxiden und
(iii) 45 bis 95 Gew.-Teilen weiteren, nichtfunktionellen, olefinisch ungesättigten Verbindungen,
besteht, wobei die Summe der Gew.-Teile (i) bis (iii) 100 beträgt.

3. Pulverlack gemäß Anspruch 1 und 2, dadurch gekennzeichnet, daß die Komponente B) aus mindestens einer gesättigten aliphatischen Dicarbonsäure mit 4 bis 12 Kohlenstoffatomen besteht.

4. Pulverlack gemäß Anspruch 1 und 2, dadurch gekennzeichnet, daß die Komponente B) aus mindestens einem monomeren und/oder polymeren Anhydrid einer aliphatischen Dicarbonsäure mit 4 bis 12 Kohlenstoffatomen besteht.

5. Pulverlack gemäß Anspruch 1 und 2, dadurch gekennzeichnet, daß die Komponente B) aus mindestens einem polyolmodifizierten, Säureanhydrid- und Carboxylgruppen im Molverhältnis von 1:1 bis 3:1 enthaltenden, Polyanhydrid einer aliphatischen Dicarbonsäure mit 4 bis 12 Kohlenstoffatomen besteht.

6. Pulverlack gemäß Anspruch 1 bis 5, dadurch gekennzeichnet, daß die Komponente D) aus mindestens einer Polyadditionsverbindung mit
a) einem Gehalt an freien Isocyanatgruppen (berechnet als NCO, Molekulargewicht = 42) von 0 bis 2 Gew.-%,
b) einem Gehalt an Uretdiongruppen (berechnet als C₂N₂O₂, Molekulargewicht = 84) von 3 bis 16 Gew.-%,
c) einem Gehalt an Urethangruppen (berechnet als CHNO₂, Molekulargewicht = 59) von 10 bis 22 Gew.-%,
d) einem Gehalt an Carbonsäureestergruppen (berechnet als CO₂, Molekulargewicht = 44) von 0 bis 20 Gew.-%
und/oder
e) einem Gehalt an Carbonatgruppen (berechnet als CO₃, Molekulargewicht = 60) von 0 bis 25 Gew.-%
besteht, mit der Maßgabe, daß der Gesamtgehalt an Carbonsäureester- und Carbonatgruppen der Polyadditionsverbindung mindestens 1 Gew.-% beträgt.

7. Verwendung des Pulverlacks gemäß Anspruch 1 bis 6 zur Beschichtung beliebiger hitzeresistenter Substrate.

8. Verwendung gemäß Anspruch 7 als Automobilklarlack.

## Claims

1. A powder coating for the production of non-yellowing, elastic coatings resistant to solvents and chemicals and curable at temperatures of 120 to 150°C, comprising
A) a binder component consisting of at least one copolymer of olefinically unsaturated monomers, containing epoxy groups and optionally hydroxyl groups and having an epoxy equivalent weight of 365 to 2840, a glass transition temperature Tg of 20 to 100°C and an average molecular weight Mw of 1500 to 30,000,
B) a curing component with a melting point or range within the temperature range 40 to 130°C, consisting of at least one component selected from (i) (cyclo)aliphatic dicarboxylic acids having 4 to 20 carbon atoms, (ii) monomeric and/or polymeric anhydrides of such dicarboxylic acids, (iii) polyol-modified polymeric anhydrides of such dicarboxylic acids, and (iv) aliphatic hydroxycarboxylic acids having 4 to 18 carbon atoms,
and optionally
C) auxiliary substances and additives known from powder coating technology,
characterized in that the powder coating additionally comprises
D) polyaddition compounds containing uretdione groups with a melting point or range within the temperature range 40°C to 125°C, based on (cyclo)aliphatic diisocyanates,
with the proviso that components A), B) and D) are present in proportions such that there are 0.5 to 1.5 carboxyl and/or anhydride groups of component B) and 0.1 to 1.2 uretdione groups of component D) per epoxy group of component A).

2. A powder coating according to Claim 1, characterized in that component A) consists of at least one copolymer of
(i) 5 to 35 parts by weight of glycidyl acrylate and/or glycidyl methacrylate,
(ii) 0 to 20 parts by weight of hydroxyalkyl acrylates and/or methacrylates having 2 to 4 carbon atoms in the alcohol radical, and/or their reaction products with ε-caprolactone or monoepoxides, and
(iii) 45 to 95 parts by weight of other, non-functional, olefinically unsaturated compounds, the sum of the parts by weight (i) to (iii) being 100.

3. A powder coating according to Claims 1 and 2, characterized in that component B) consists of at least one saturated aliphatic dicarboxylic acid having 4 to 12 carbon atoms.

4. A powder coating according to Claims 1 and 2, characterized in that component B) consists of at least one monomeric and/or polymeric anhydride of an aliphatic dicarboxylic acid having 4 to 12 carbon atoms.

5. A powder coating according to Claims 1 and 2, characterized in that component B) consists of at least one polyol-modified polyanhydride of an aliphatic dicarboxylic acid having 4 to 12 carbon atoms, containing acid anhydride and carboxyl groups in a molar ratio of 1:1 to 3:1.

6. A powder coating according to Claims 1 to 5, characterized in that component D) consists of at least one polyaddition compound which has
a) a content of free isocyanate groups (calculated as NCO, molecular weight = 42) of 0 to 2 wt.%,
b) a content of uretdione groups (calculated as C₂N₂O₂, molecular weight = 84) of 3 to 16 wt.%,
c) a content of urethane groups (calculated as CHNO₂, molecular weight = 59) of 10 to 22 wt.%,
d) a content of carboxylic acid ester groups (calculated as CO₂, molecular weight = 44) of 0 to 20 wt.%
and/or
e) a content of carbonate groups (calculated as CO₃, molecular weight = 60) of 0 to 25 wt.%,
with the proviso that the total content of carboxylic acid ester and carbonate groups in the polyaddition compound is at least 1 wt.%.

7. Use of the powder coating according to Claims 1 to 6 for the coating of any heat-resistant substrates.

8. Use according to Claim 7 as an automotive finish.

## Revendications

1. Vernis en poudre pour l'application de revêtements durcissables à des températures de 120 à 150°C, ne jaunissant pas, élastiques, résistant aux solvants et aux agents chimiques, qui contient
A) un composant liant consistant en au moins un copolymère de monomères à insaturation oléfinique, contenant des groupes époxydes et le cas échéant des groupes hydroxy, à un poids équivalent d'époxyde de 365 à 2 840, avec une température de transition du second ordre Tg de 20 à 100°C et un poids moléculaire moyen Mw de 1 500 à 30 000,
B) un composant durcisseur dont le point ou intervalle de fusion se situe dans l'intervalle de température de 40 à 130°C, consistant en au moins un composant choisi parmi (i) les acides dicarboxyliques (cyclo)aliphatiques en C₄-C₂₀ (ii) les anhydrides monomères et/ou polymères de ces acides dicarboxyliques, (iii) les anhydrides polymères de ces acides dicarboxyliques, modifiés par des polyols, et (iv) les acides hydroxycarboxyliques aliphatiques en C₄-C₁₈,
et le cas échéant
C) les produits auxiliaires et additifs connus dans le domaine des vernis en poudre,
caractérisé en ce qu'il contient en outre
D) des produits de polyaddition à groupes uretdiones dont le point ou intervalle de fusion se situe dans l'intervalle de température de 40 à 125°C, à base de diisocyanates (cycle)aliphatiques,
à des proportions relatives des composants A), B) et D) telles que, pour chaque groupe époxyde du composant A), il y ait 0,5 à 1,5 groupe carboxyle et/ou anhydride du composant B) et 0,1 à 1,2 groupe uretdione du composant D).

2. Vernis en poudre selon la revendication 1, caractérisé en ce que le composant A) consiste en au moins un copolymère de
(i) 5 à 35 parties en poids d'acrylate de glycidyle et/ou de méthacrylate de glycidyle,
(ii) 0 à 20 parties en poids d'esters hydroxyalkyliques de l'acide acrylique et/ou méthacrylique contenant 2 à 4 atomes de carbone dans le radical alcoolique et/ou de leurs produits de réaction avec l'ε-caprolactone, ou de monoépoxydes et
(iii) 45 à 95 parties en poids d'autres composés à insaturation oléfinique non fonctionnels,
la somme des parties en poids de (i) à (iii) étant égale à 100.

3. Vernis en poudre selon les revendications 1 et 2, caractérisé en ce que le composant B) consiste en au moins un acide dicarboxylique aliphatique saturé en C₄-C₁₂.

4. Vernis en poudre selon les revendications 1 et 2, caractérisé en ce que le composant B) consiste en au moins un anhydride monomère et/ou polymère d'un acide dicarboxylique aliphatique en C₄-C₁₂.

5. Vernis en poudre selon les revendications 1 et 2, caractérisé en ce que le composant B) consiste en au moins un polyanhydride d'un acide dicarboxylique aliphatique en C₄-C₁₂, modifié par des polyols et contenant des groupes anhydrides d'acides et carboxyles dans un rapport molaire de 1:1 à 3:1.

6. Vernis en poudre selon les revendications 1 à 5, caractérisé en ce que le composant D) consiste en au moins un produit de polyaddition ayant
a) une teneur en groupes isocyanates libres (exprimée en NCO, poids équivalent 42) de 0 à 2 % en poids,
b) une teneur en groupes uretdiones (exprimée en C₂N₂O₂, poids équivalent 84) de 3 à 16 % en poids,
c) une teneur en groupes uréthanes (exprimée en CHNO₂, poids équivalent 59) de 10 à 22 % en poids,
d) une teneur en groupes esters d'acides carboxyliques (exprimée en CO₂, poids équivalent 44) de 0 à 20 % en poids,
et/ou
e) une teneur en groupes carbonates (exprimée en CO₃, poids équivalent 60) de 0 à 25 % en poids,
avec une teneur totale en groupes esters d'acides carboxyliques et carbonates d'au moins 1 % en poids dans le produit de polyaddition.

7. Utilisation du vemis en poudre selon les revendications 1 à 6 pour l'application de revêtements sur des supports quelconques résistant à la chaleur.

8. Utilisation selon la revendication 7 en tant que vernis clair pour automobiles.
